# EUROPÄISCHE PATENTSCHRIFT

(11) **EP 0 819 377 B1**
(45) Veröffentlichungstag und Bekanntmachung des Hinweises auf die Patenterteilung: **31.05.2000**
(21) Anmeldenummer: 97107351.5
(22) Anmeldetag: 03.05.1997
(51) Int. Cl.: A01G 17/14

(54) **Pfahl aus Stahlblech für Drahtrahmen im Wein- oder Obstbau**
Post of steel plate for cable frame in viticulture and fruit culture
Piquet en tôle d'acier pour treillis en viticulture et la culture de fruits

(30) Priorität: 18.07.1996 DE 19629023; 18.12.1996 DE 19652597
(43) Veröffentlichungstag der Anmeldung: 21.01.1998
(73) Patentinhaber: Reisacher, Raimund, Dr.-Ing., 67117 Limburgerhof (DE)
(72) Erfinder: Reisacher, Raimund, Dr.-Ing., 67117 Limburgerhof (DE)
(74) Vertreter: Fischer, Wolf-Dieter, Dipl.-Ing.

(56) Entgegenhaltungen:
- DE-A- 3 522 140
- DE-A- 4 436 936
- DE-B- 1 212 768
- FR-A- 2 570 575
- FR-A- 2 595 536

## Beschreibung

Die Erfindung betrifft einen Pfahl aus Stahlblech für Drahtrahmen im Wein- oder Obstbau mit in etwa U-förmigem Querschnitt und an den Schenkeln des U-Profils angeordneten außenliegenden Haken, die durch Ausstanzen unter Bildung eines Stanzloches und Formbiegen von Zungen aus dem Stahlblech gebildet sind, wobei Einfachhaken und Doppelhaken vorgesehen sind und der jeweilige Haken eine aus dem Schenkel des U-Profils heraus ansteigende Flanke aufweist, die in die etwa parallel zu den Schenkeln verlaufende Zunge übergeht.

Ein derartiger Pfahl ist bekannt (DE 4436936 A1), wobei an den Schenkeln des U-Profils außenliegende Haken angeordnet sind, die durch Ausstanzen und Formbiegen von Zungen aus dem Stahlblech gebildet sind. Diese Haken können als Einfachhaken oder Doppelhaken vorgesehen sein. Der jeweilige Haken weist eine auf den Schenkeln des U-Profils heraus schräg ansteigende Flanke auf, die in den etwa parallel zu den Schenkeln verlaufenden Abschnitt übergeht, wobei in den Rücken der Flanke eine nach außen gerichtete Sicke geformt ist.

Im Wein- oder Obstbau werden zunehmend Vollerntermaschinen eingesetzt, die mit Schlagstäben versehen sind und es hierbei sehr leicht passieren kann, daß die an den Pfählen angeordneten Haken durch diese Schlagstäbe zugeschlagen werden. Dadurch ergeben sich einige Nachteile, nämlich daß der durchlaufende Spanndraht gequetscht wird, die Haken durch die plastische Deformation schnell abbrechen können und in das Stanzloch gedrückte Haken nur schwer wieder aufgebogen werden können, da sie nur geringe Ansatzpunkte für Werkzeuge bieten und sich im Stanzloch verkeilen können.

Der Erfindung liegt die Aufgabe zugrunde, einen Pfahl der eingangs genannten Art so auszubilden, daß die Haken nur so weit zugebogen werden können, daß deren Zunge nicht in das Stanzloch eingedrückt wird und somit plastische Deformationen gering bleiben, und zugebogene Haken manuell oder maschinell leicht wieder geöffnet werden können.

Diese Aufgabe wird gemäß einer ersten Ausführungsform dadurch gelöst, daß die Zunge zum offenen Ende des Hakens ein verbreitertes Hakenteil aufweist, dem ein verjüngter Abschnitt des Stanzloches gegenüberliegt.

Die Lösung der Aufgabe ergibt sich auch gemäß einer zweiten Ausführungsform dadurch, daß bei ausgeformtem Haken die Zunge seitlich, d.h. parallel zur Fläche des Schenkels des Pfahles und daher die mit dem Stanzloch fluchtende Stellung verlassend, verbogen ist.

Vorteilhafte Ausgestaltungen der Erfindung ergeben sich aus den Ansprüchen 3 bis 9.

Die Erfindung bringt insbesondere den Vorteil, daß sich der Haken auch im zugeschlagenen Zustand von oben her öffnen läßt. Im Idealfall öffnet sich der zugeschlagene Haken selbsttätig, wenn von oben am Blech entlang ein Draht heruntergedrückt wird. Liegt der Draht innerhalb eines zugeschlagenen Hakens, so wird durch den geringen Deformationsgrad und durch die keilförmige Innengestaltung gewährleistet, daß ein nach oben gezogener Draht den Haken selbsttätig öffnen kann. Diese Eigenschaften sind insbesondere bei Maschinen wichtig, die automatisch Drähte verhängen.

Die Erfindung wird in der nachfolgenden Beschreibung anhand von in den Zeichnungen dargestellten Ausführungsbeispielen näher erläutert.

Es zeigen,
- Fig. 1: eine Teilansicht eines Pfahles mit einem Haken im Aufriß gemäß einer ersten Ausführungsform der Erfindung,
- Fig. 2: einen Schnitt nach der Linie A - A in Fig. 1 bei offenem Haken,
- Fig. 3: ein entsprechender Schnitt bei zugeschlagenem Haken,
- Fig. 4: eine weitere Teilansicht des Pfahles gemäß einer zweiten Ausführungsform des Hakens im Aufriß,
- Fig. 5: einen Schnitt nach der Linie B - B in Fig. 4 mit offenem Haken,
- Fig. 6: einen Schnitt nach der Linie B - B in Fig. 4 bei zugeschlagenem Haken,
- Fig. 7: eine Teilansicht des Pfahles mit einem Haken im Aufriß gemäß einer weiteren Ausgestaltung der ersten Ausführungsform,
- Fig. 8: einen Schnitt nach der Linie C - C in Fig. 7 bei offenem Haken,
- Fig. 9: einen Schnitt nach der Linie C - C in Fig. 7 bei zugeschlagenem Haken,
- Fig. 10: eine Teilansicht eines Pfahles mit einem Haken im Aufriß gemäß einer dritten Ausführungsform der Erfindung,
- Fig. 11: eine entsprechende Ansicht des Pfahles gemäß vierten weiteren Ausführungsform,
- Fig. 12: eine entsprechende Ansicht des Pfahles gemäß einer weiteren Ausgestaltung der dritten Ausführungsform,
- Fig. 13: eine Ansicht des Pfahles gemäß einer weiteren Ausgestaltung der vierten Ausführungsform,
- Fig. 14: eine Ansicht des Pfahles gemäß einer fünften Ausführungsform,
- Fig. 15: einen Schnitt nach der Linie D - D in Fig. 14 bei offenem Haken und
- Fig. 16: einen entsprechenden Schnitt bei zugeschlagenem Haken.

Ein derartiger Pfahl 1 wird in das Erdreich eingesetzt, wobei sein Querschnitt in etwa U-förmig ist und an den etwa parallel verlaufenden Schenkeln 6 Haken 3 (Einfachhaken oder Doppelhaken) angeordnet sind.

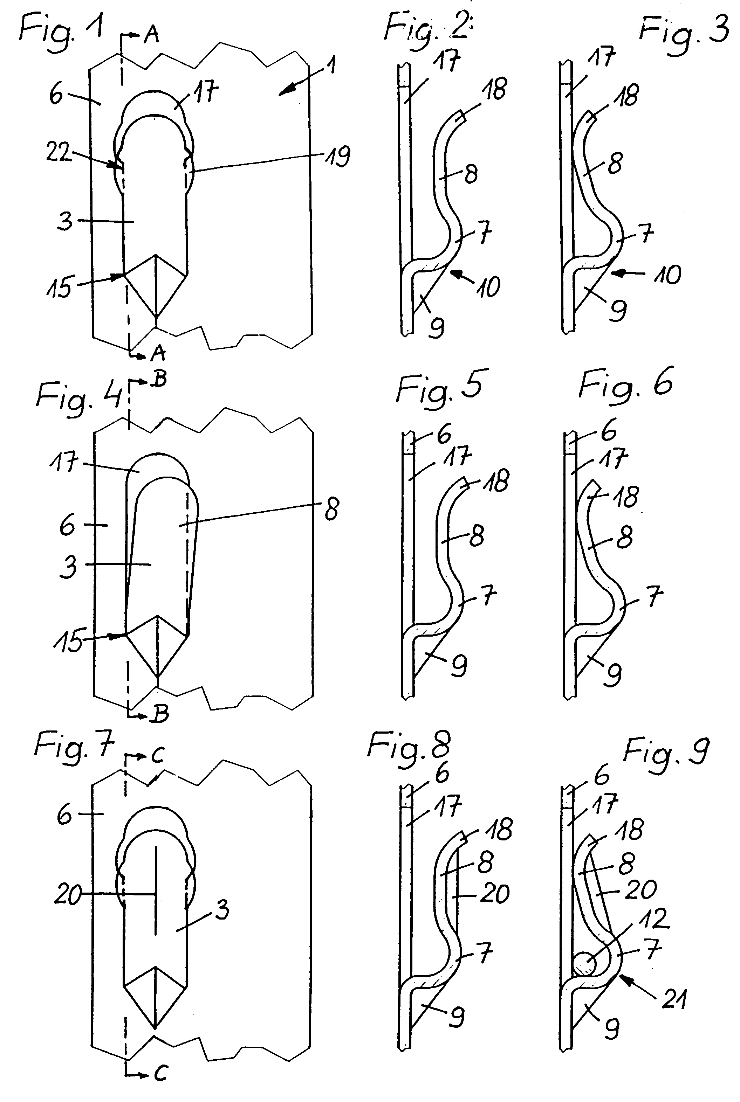

Die Haken 3 werden durch Ausstanzen und Formbiegen aus den Schenkeln 6 herausgeformt. Von diesen Haken 3 wird der Spanndraht 12 (Fig. 9) aufgenommen.

Bei dem in den Figuren dargestellten als Einfachhaken ausgebildeten Haken 3 ist eine aus dem einen Schenkel 6 herausgeformte, nach außen gewölbte bogenförmige Flanke 7 vorgesehen, wobei in den Rücken 10 dieser Flanke 7 eine Sicke 9 eingearbeitet ist, die sich von innen nach außen wölbt, so daß die Flanke 7 verstärkt wird. An die Flanke 7 schließt sich eine Zunge 8 an, die in etwa parallel zum Schenkel 6 verläuft. Die Sicke 9 erstreckt sich von der Mitte der Zunge 8 zur Basis 15 der Flanke 7, und zwar etwa zu den seitlichen Eckpunkten dieser Basis 15, so daß eine Art Dreieck gebildet wird. Insoweit entspricht der Pfahl 1 dem vorbekannten Stand der Technik nach der DE 44 36 936 A1.

Gemäß der in den Figuren 1 bis 3 dargestellten Ausführungsform der Erfindung weist die Zunge 8 ein gegen die Hakenspitze 18 hin verbreitertes Hakenteil 19 auf, so daß sich die ausgeklinkte Zunge 8 nicht wieder durch das Stanzloch 17 drücken läßt, da dann das verbreiterte Hakenteil 19 auf einem verjüngten Abschnitt 22 des Stanzloches 17 zu liegen kommt. Weiterhin ist die Hakenspitze 18 nach außen hin aufgebogen, so daß sich der Haken 3 auch im zugeschlagenen Zustand leicht wieder öffnen läßt.

Bei der weiteren in den Figuren 4 bis 6 dargestellten Ausführungsform der Erfindung ist der ohne ein verbreitertes Hakenteil 19 ausgeformte Haken 3 seitlich verbogen, wobei die Verbiegung im Bereich der Basis 15 liegt, so daß sich die ausgeklinkte Zunge 8 nicht wieder durch das Stanzloch 17 drücken läßt, da zuvor der Haken 3 einseitig auf dem Blech des Schenkels 6 neben dem Stanzloch 17 aufsetzt.

Bei der weiteren in den Figuren 7 bis 9 dargestellten Ausgestaltung weist der Haken 3 im Prinzip die gleiche Form auf wie der Haken 3 in den Figuren 1 bis 3, wobei jedoch die Zunge 8 an ihrer Außenseite mit einer eingeprägten Sicke 20 versehen ist, wodurch eine Deformationszone eingegrenzt und eine Sollbiegestelle 21 im Bereich der Flanke 7 herbeigeführt wird. Hierbei ist der obere Teil der Zunge 8 hochgradig formstabil, so daß die Geometrie der keilförmigen Spalte (z.B. aufgebogene Hakenspitze 18) auch nach harten Schlägen auf den Haken 3 erhalten bleibt.

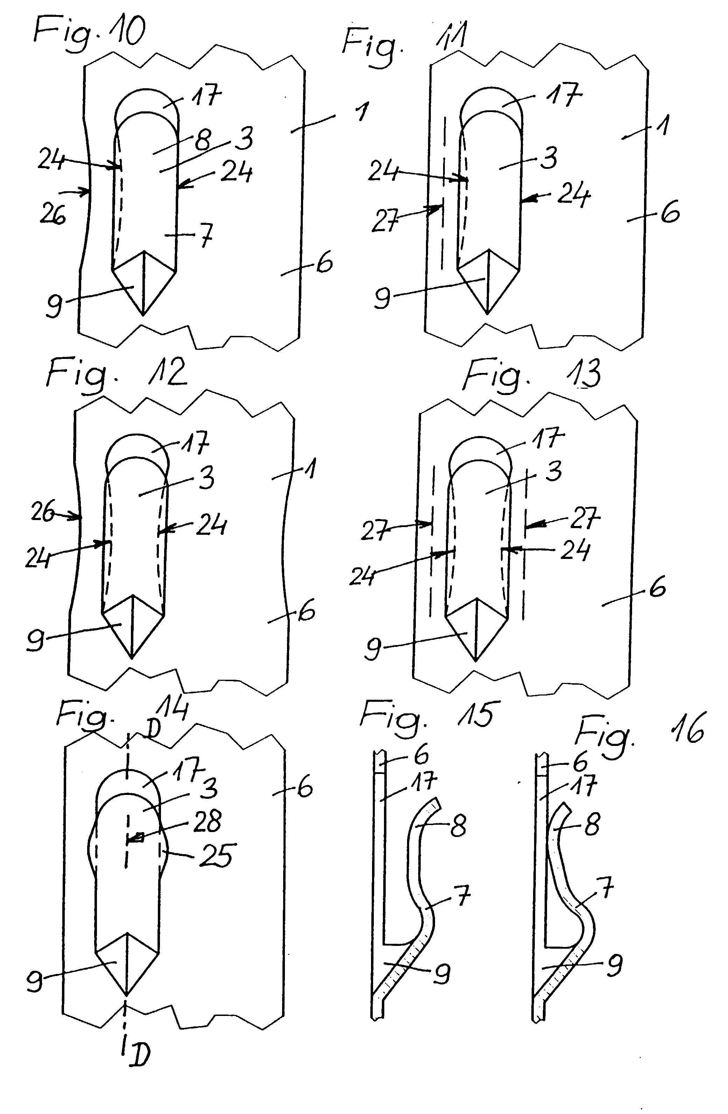

Bei der Ausführungsform nach Fig. 10 ist am unteren Ansatz des Hakens 3 eine Sicke 9 ausgeformt, an die sich die Flanke 7 und Zunge 8 des Hakens anschließt. Durch seitliches Eindrücken der Kante 26 des Schenkels 6 wird das Stanzloch 17 an der einen Längskante 24 in der Breite verringert, so daß die Zunge 8 nicht durch das Stanzloch 17 hindurchgedrückt werden kann.

Bei der weiteren Ausführungsform nach Fig. 11 wird der Schenkel 6 im Bereich der einen Längskante 24 nach innen geformt, und zwar durch Fließpressen an der parallel zur Längskante 24 verlaufenden Linie 27.

Die Ausführungsform nach Fig. 12 zeigt eine Variante gemäß Fig. 10, indem noch zusätzlich die rechte Längskante 24 eingedrückt wird. Demgemäß ist auch die Ausführungsform nach Fig. 13 eine Abwandlung der Ausführungsform nach Fig. 11, indem zusätzlich eine Verringerung der Breite des Stanzloches 17 an einer rechten Drucklinie 27 erfolgt.

Bei der weiteren Ausführungform nach den Figuren 14 bis 16 wird die Zunge 8 durch einen Präge- oder Quetschvorgang verbreitert, und es ergibt sich hierbei die Verbreiterung 25. Die Verbreiterung 25 kann dadurch erzielt werden, daß an einer Drucklinie 28 die Verformung vorgenommen wird und sich somit die Verbreiterung 25 durch Fließpressen ergibt.

## Patentansprüche

1. Pfahl (1) aus Stahlblech für Drahtrahmen im Wein- oder Obstbau, mit in etwa U-förmigem Querschnitt und an den Schenkeln (6) des U-Profils angeordneten außenliegenden Haken (3), die durch Ausstanzen unter Bildung eines Stanzloches (17) und Formbiegen von Zungen (8) aus dem Stahlblech gebildet sind, wobei Einfachhaken und Doppelhaken vorgesehen sind, und der jeweilige Haken (3) eine aus dem Schenkel (6) des U-Profils heraus ansteigende Flanke (7) aufweist, die in die etwa parallel zu den Schenkeln (6) verlaufende Zunge (8) übergeht,
dadurch gekennzeichnet, daß die Zunge (8) zum offenen Ende (Hakenspitze 18) des Hakens (3) ein verbreitertes Hakenteil (19) aufweist, dem ein verjüngter Abschnitt (22) des Stanzloches (17) gegenüberliegt.

2. Pfahl (1) aus Stahlblech für Drahtrahmen im Wein- oder Obstbau, mit in etwa U-förmigem Querschnitt und an den Schenkeln (6) des U-Profils angeordneten außenliegenden Haken (3), die durch Ausstanzen unter Bildung eines Stanzloches (17) und Formbiegen von Zungen (8) aus dem Stahlblech gebildet sind, wobei Einfachhaken und Doppelhaken vorgesehen sind, und der jeweilige Haken (3) eine aus den Schenkeln (6) des U-Profils heraus ansteigende Flanke (7) aufweist, die in die etwa parallel zu den Schenkeln (6) verlaufende Zunge (8) übergeht,
dadurch gekennzeichnet, daß bei ausgeformtem Haken (3) die Zunge (8) seitlich, das heißt parallel zur Fläche des Schenkels (6) des Pfahles (1) und dabei die mit dem Stanzloch (17) fluchtende Stellung verlassend verbogen ist.

3. Pfahl (1) nach Anspruch 1 oder 2 dadurch gekennzeichnet, daß das Stanzloch (17) an dem Schenkel (6) des Pfahlprofils durch einen Präge-, Quetsch- oder Profiliervorgang verkleinert ist.

4. Pfahl (1) nach einem der Ansprüche 1 bis 3, dadurch gekennzeichnet, daß der ausgeformte Haken (3) durch einen Präge- oder Quetschvorgang verbreitert ist.

5. Pfahl (1) nach einem der Ansprüche 1 bis 4, dadurch gekennzeichnet, daß der den Haken (3) enthaltende Schenkel (6) an einer oder beiden Längskanten (24) des Hakens (3) im Bereich des Stanzloches (17) eingedrückt ist.

6. Pfahl (1) nach Anspruch 1 bis 5, dadurch gekennzeichnet, daß die Hakenspitze (18) nach außen hin aufgebogen ist.

7. Pfahl (1) nach Anspruch 1 bis 6, dadurch gekennzeichnet, daß die Zunge (8) eine eingeprägte Sikke (20) aufweist.

8. Pfahl (1) nach Anspruch 1 bis 7, dadurch gekennzeichnet, daß in den Rücken (10) der Flanke (7) eine Sicke (9) geformt ist.

9. Pfahl (1) nach Anspruch 1 bis 8, dadurch gekennzeichnet, daß die Flanke (7) bogenförmig nach außen gewölbt ist.

## Claims

1. Support (1 ) out of sheet steel for wire frames in wine- or fruit-growing with a more or less U-shaped cross-section and hooks (3) situated externally, arranged on the sides (6) of the U-profile, which were shaped out of the sheet steel by punching out and forming a signal hole (17) as well as form-buckling of tongues (8), whereat simple hooks and double hooks are planned and where the respective hook (3) shows a flank (7) ascending out of side (6) of the U-profile and turning into tongue (8) which runs more or less parallel to the sides (6),
characterized by a tongue (8) showing towards the open end (point of the hook 18) of the hook (3) a widened part of the hook (19) which has a narrowed segment (22) of the signal hole (17) opposite.

2. Support (1 ) out of sheet steel for wire frames in wine- or fruit-growing with a more or less U-shaped cross-section and hooks (3) situated externally, arranged on the sides (6) of the U-profile, which were shaped out of the sheet steel by punching out and forming a signal hole (17) as well as form-buckling of tongues (8) whereat simple hooks and double hooks are planned and where the respective hook (3) shows a flank (7) ascending out of side (6) of the U-profile and turning into tongue (8) which runs more or less parallel to the sides (6),
characterized the way that having a shaped hook (3) the tongue (8) is buckled laterally, i.e. parallel to the surface of side (6) of support (1 ) and with this leaving the position aligning with the signal hole (17).

3. Support (1), following the characterization by claim 1 or 2, characterized by a signal hole (17) on side (6) of the support-profile reduced by a stamping, crushing or treading process.

4. Support (1), following one of the characterizations by claims 1 to 3, characterized by a shaped hook (3) widened by a stamping or crushing process.

5. Support (1), following one of the characterizations by claim 1 to 4, characterized the way that side (6) containing hook (3) is dented on one or both longitudinal edges (24) of hook (3) within the area of signal hole (17).

6. Support (1), following the characterizations by claim 1 to 5, characterized the way that the point of the hook (18) is bend open towards the outside.

7. Support (1), following the characterizations by claim 1 to 6, characterized the way that tongue (8) shows an imprinted corrugation (20).

8. Support (1), following the characterizations by claim 1 to 7, characterized the way that a corrugation (9) is molded into the back (10) of flank (7).

9. Support (1), following the characterizations by claim 1 to 8, characterized the way that flank (7) is bend towards the outside in the shape of an arch.

## Revendications

1. Pieu (1) de tôle d'acier pour cadres métalliques dans la culture de la vigne ou des fruits avec une section transversale à peu près en forme d'un U et des crochets situés à l'extérieur (3) et arranger aux côtés (6) du profil U, qui sont modelés du tôle d'acier en poinçonnant et formant un trou de poinçonneuse (17) ainsi qu'en cintrant en forme des langues (8), à quoi il sont prévus des crochets simples et doubles et le crochet (3) respectif montre un flanc (7) montant du côté (6) du profil U, qui tourne en langue (8) s'étendant à peu près parallèle aux côtés (6),
caractérisé de manière que la langue (8) montre vers la fin ouverte (pointe du crochet 18) du crochet un part élargi du crochet (19), opposé à une partie amincie (22) du trou de poinçonneuse (17).

2. Pieu (1) de tôle d'acier pour cadres métalliques dans la culture de la vigne ou des fruits avec une coupe transversale à peu près en forme d'un U et des crochets situés à l'extérieur (3) et arranger aux côtés (6) du profil U, qui sont modelés du tôle d'acier en poinçonnant et formant un trou de poinçonneuse (17) ainsi qu'en cintrant en forme des langues (8), à quoi il sont prévus des crochets simples et doubles et le crochet (3) respectif montre un flanc (7) montant du côté (6) du profil U, qui tourne en langue (8) s'étendant à peu près parallèle aux côtés (6),
caractérisé de manière que considérant les crochets modelés (3), la langue (8) est déformée latéralement, c'est-à-dire parallèle à la surface du côté (6) du pieu (1) et ainsi quittant la position alignant avec le trou de poinçonneuse (17).

3. Pieu (1), après revendication 1 ou 2, caractérisé de manière que le trou de poinçonneuse (17) au côté (6) du profil du pieu est diminué par un processus d'estampage, de compression ou de profilage.

4. Pieu (1), après une des revendications 1 à 3, caractérisé de manière que le crochet modelé (3) est élargi par un processus d'estampage ou de compression.

5. Pieu (1), après une des revendications 1 à 4, caractérisé de manière que le côté contenant le crochet (3) est enfoncé à une ou les deux arêtes longitudinales (24) du crochet (3) dans la zone du trou de poinçonneuse (17).

6. Pieu (1), après revendications 1 à 5, caractérisé de manière que la pointe du crochet (18) est pliée vers l'extérieur.

7. Pieu (1), après revendications 1 à 6, caractérisé de manière que la langue (8) montre une moulure estampée (20).

8. Pieu (1), après revendications 1 à 7, caractérisé de manière qu'il est formée une moulure (9) au dos (10) du flanc (7).

9. Pieu (1), après revendications 1 à 8, caractérisé de manière que le flanc (7) est voûté par l'extérieur en arc.
